# FASCICULE DE BREVET EUROPEEN

(11) **EP 1 266 782 B1**
(45) Date de publication et mention de la délivrance du brevet: **12.07.2006**
(21) Numéro de dépôt: 02290940.2
(22) Date de dépôt: 15.04.2002
(51) Int. Cl.: B60J 7/20

(54) **Butées amovibles de toit dans le coffre d'un cabriolet**
Abnehmbarer Dachanschlag in einem Kofferraum eines Cabriolet-Fahrzeugs
Movable roof stop in the luggage compartment of a convertible

(30) Priorité: 15.06.2001 FR 0107892
(43) Date de publication de la demande: 18.12.2002
(73) Titulaire: Peugeot Citroen Automobiles, 92200 Neuilly Sur Seine (FR)
(72) Inventeur: George, Aubert, 90000 Belfort (FR)
(74) Mandataire: de Lambilly Delorme, Marie Pierre

(56) Documents cités:
- DE-C- 19 636 027
- FR-A- 2 796 901
- US-A- 4 969 679

## Description

L'invention concerne les véhicules automobiles transformables en cabriolet et notamment de coupé en cabriolet.

Ces véhicules sont constitués d'un toit rigide pliant venant se loger dans le coffre.

Le toit qui comporte une lunette arrière en verre est fragile et doit donc en position repliée dans le coffre se poser sur des butées, soit directement, soit par l'intermédiaire d'éléments de la structure du toit non visible en position déployée.

Afin d'éviter tout endommagement du toit et de permettre sa manoeuvre, l'utilisateur doit pouvoir séparer la partie de rangement des bagages de la partie de rangement du toit.

On connaît des systèmes de rideau coulissant permettant de séparer et de protéger les articulations du toit à la fois en position fixe et en mouvement. Le rideau est déplié pour séparer le coffre de la partie réservée au toit en position plié, et il est enroulé en configuration coupé. Un tel système est connu par example de DE-C-196 36 027.

Cependant, avec tous ces équipements, en configuration cabriolet quand le toit est plié dans le coffre il réduit d'autant ce dernier.

Le but de l'invention est de proposer un système qui permet à la fois de protéger le toit, de permettre sa manoeuvre tout en conservant une part plus importante du coffre.

La réduction du nombre d'éléments disposé dans le coffre améliore également l'esthétique et la finition du coffre.

L'invention diminue les coûts de fabrications en simplifiant le garnissage du coffre et limite les investissements et le temps de montage.

D'autre part, si la lunette est articulée sur son cadre et se décale par rapport aux custodes en position repliée, le toit replié est alors moins encombrant mais les cotés des custodes sont alors en contact avec les bagages.

Le véhicule selon l'invention est un véhicule automobile transformable en cabriolet et comportant un toit rigide basculant entre une position fermée et une position ouverte rangée dans le coffre caractérisé en ce qu'il comporte au moins une butée de toit solidaire d'un rideau de protection disposée dans le coffre.

Toutes les butées peuvent être solidaires du rideau. Ainsi les butées se retirent dans le fond du coffre avec le rideau libérant ainsi de l'espace. En configuration cabriolet, les points de fixation du rideau et des butées sont identiques dégageant ainsi plus de place qu'une configuration classique.

Selon une variante de l'invention, la butée est solidaire d'une traverse formant l'extrémité du rideau. La traverse assure ainsi une certaine rigidité à l'extrémité du rideau où est située la ou les butées.

Selon une variante de l'invention, la butée est implantée sur le dessus de la traverse pour que la lunette n'entre pas en contact avec cette dernière.

Selon une variante de l'invention, le toit est formé de deux custodes et un cadre supportant une lunette arrière. Le toit se plie en deux parties (la lunette et les deux custodes) dans le coffre ce qui le rend plus compact.

Selon une variante de l'invention, la lunette est mobile par rapport au cadre. Elle est articulée en partie basse sur une traverse reliant les deux custodes et en partie haute deux biellettes permettent le basculement de la lunette ce qui permet de réduire l'encombrement du toit en position repliée.

Selon une variante de l'invention, la traverse est prolongée latéralement par au moins une butée pour supporter les custodes. Il existe ainsi deux sortes de butées une pour tenir la lunette et une pour tenir les custodes, chacune placée de chaque coté du coffre.

Selon une variante de l'invention, chaque butée est équipée d'une joue de protection qui empêche le contact entre les bagages et les custodes en position repliée.

Selon une variante de l'invention, la traverse est guidée dans au moins un logement formant appui et disposé dans la structure du véhicule. La traverse comporte un ergot qui coopère avec un logement de forme tubulaire disposé sur une des parois latérales du coffre.

Selon une variante de l'invention, le coffre comporte au moins un capteur de présence de la traverse. Le capteur indique si le rideau est tiré ou pas, et donc si le coffre est séparé en deux. Ces capteurs sont implantés dans la zone de fixation du rideau sur au moins un des supports de fixation arrière du véhicule. Mais ils peuvent également être disposés à l'avant du coffre.

Selon une variante de l'invention, le capteur coopère avec un système de verrouillage du toit. Le système de verrouillage empêche l'actionnement du toit si le rideau n'est pas dans la position normale pour le mouvement considéré, soit tiré pour le pliage.

Selon une variante de l'invention, le rideau s'enroule dans un boîtier. Le rideau est donc rangé et protégé lorsqu'il n'est pas utilisé.

L'invention sera mieux comprise à la lecture de la description qui va suivre donnée uniquement à titre d'exemple et faite en se référant aux dessins annexés dans lesquels:
- la figure 1 est une vue de coté de l'arrière du véhicule en configuration coupé,
- la figure 2 est une vue de coté de l'arrière du véhicule en configuration cabriolet,
- la figure 3 est une vue de dessus de l'arrière du véhicule en configuration coupé,
- la figure 4 est une vue de dessus de l'arrière du véhicule en configuration cabriolet avec la lunette partiellement enlevée,
- la figure 5 est une vue selon la coupe VV de la figure 2.

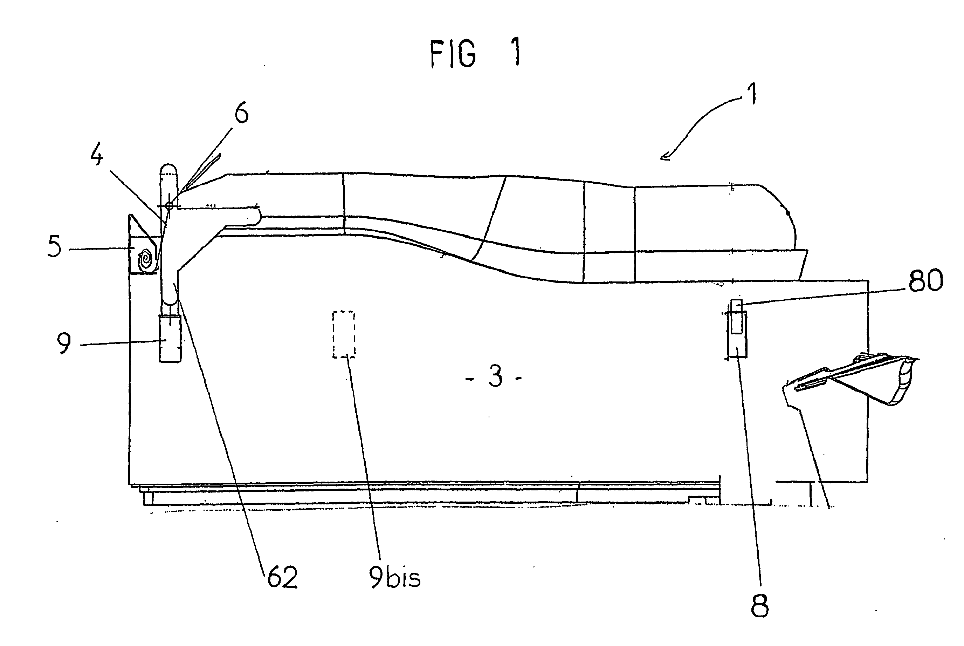

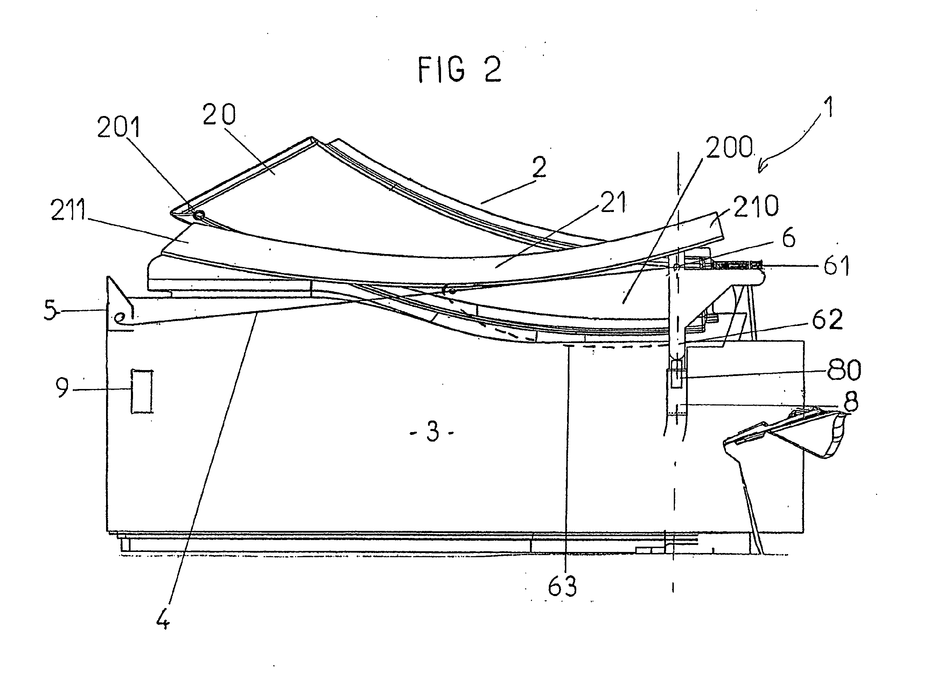

Le véhicule 1 dont on voit l'arrière sur les figures 1 et 2, comporte un toit 2 (cf figure 2) comprenant 3 parties: deux custodes 20 et un cadre de lunette 21. L'arrière du véhicule se situe sur la droite des figures 1 et 2.

L'arrière du véhicule 1 comprend également un coffre 3 dans lequel le toit 2 vient se replier.

Le coffre 3, comme on le voit à la figure 2, est équipé d'un rideau 4 venant s'enrouler dans un boîtier 5.

Ce rideau 4 est fixé à une traverse 6 qui peut prendre deux position une à l'arrière du coffre 3 (fig. 2) et une à l'avant (fig. 1). La traverse 6 peut se fixer dans un logement 8 disposé dans chacun des cotés et à l'arrière dudit coffre 3, ou dans un deuxième logement 9 disposé dans chacun des cotés du coffre 3 à l'avant de celui-ci grâce à un ergot tubulaire 62 disposé sous ladite traverse et de part et d'autre de celle-ci.

Des capteurs de présence 80 sont placés dans le logement 8. Ils sont constitués, par exemple, d'une lame souple qui s'escamote à la mise en place de l'ergot 62 dans le logement 8 et ouvrant ou fermant un circuit électrique de détection (non représenté). Ces capteurs 80 pourraient de la même façon être placés dans le logement 9 dans ce cas ils indiqueraient que le rideau 4 est enroulé et non déroulé.

Le rideau 4 (cf fig. 1) peut être ramené à sa position repliée ou enroulée dans le boîtier 5 par un moyen de rappel connu (non représenté).

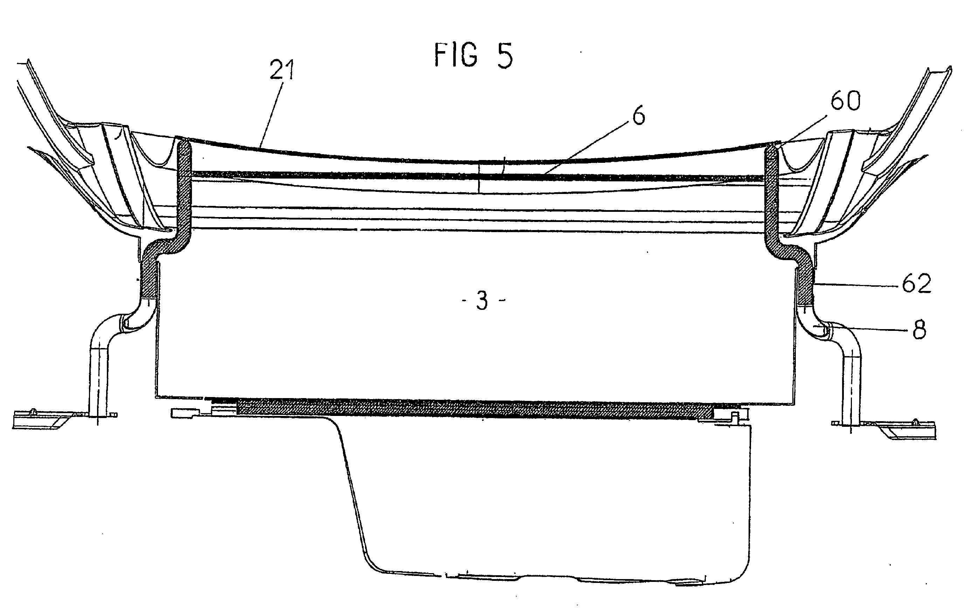

Comme on le voit à la figure 5, la traverse 6 comporte des butées 60 disposées au dessus et de part et d'autre de ladite traverse qui permettent déposer le cadre de la lunette 21 dans le coffre 3 en position pliée en toute sécurité.

La lunette arrière 21 est montée sur un cadre métallique équipé d'un joint périphérique qui assure l'étanchéité (non représenté). Il est articulé à sa partie arrière 211 sur la traverse 201 reliant les deux custodes 20 et actionné par des biellettes (non représentées) disposées en partie haute 210 du toit 2.

Lors de l'action de repliement du toit 2, ces deux bielles décalent l'avant 210 de la lunette 21 par rapport aux custodes 20 vers le haut comme on le voit à la figure 2. Le bord avant 200 des custodes 20 dépassent dans le coffre 3.

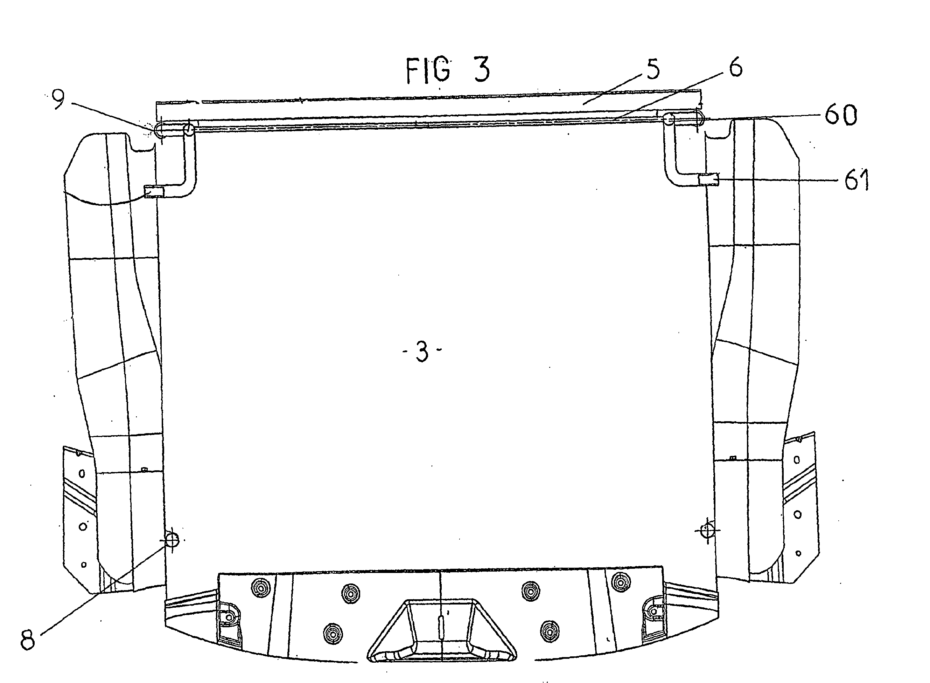

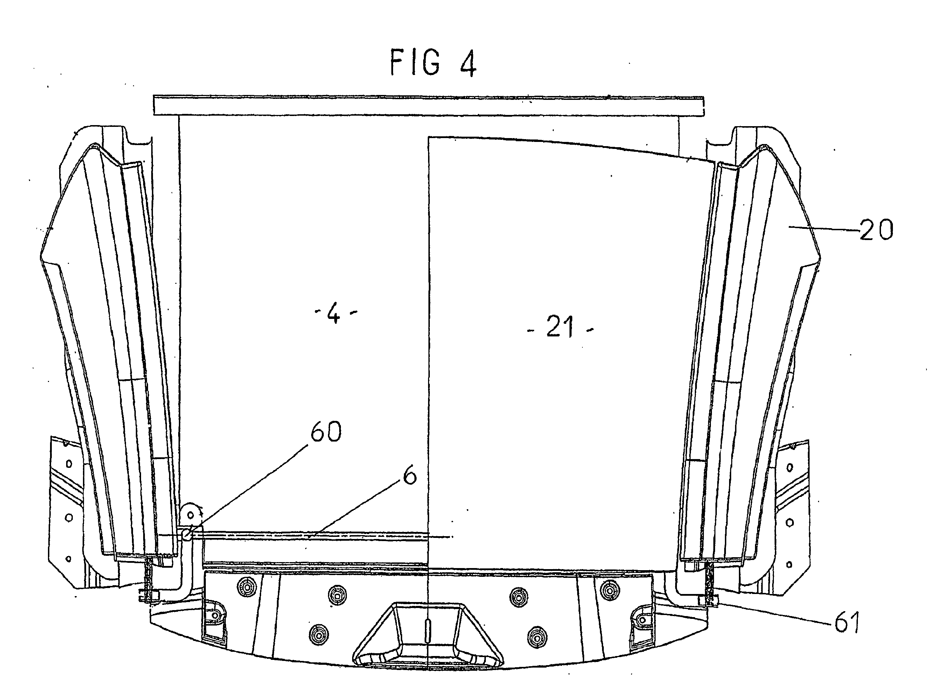

Les custodes 20 en position repliée s'appuient sur des butées 61 (cf fig. 3 et 4) également positionnées de part et d'autre de la traverse 6. Ces butées 61 sont solidaires de la traverse 6 et sont rangés au fond du coffre 3 en position toit déplié (fig. 3) et placés à l'arrière du coffre 3 en position cabriolet (fig.4). Ces butées 61 sont orientées vers l'extérieur, les custodes 20 étant plus large que le cadre de la lunette 21, elles dépassent dudit cadre.

Pour assurer la protection des custodes 20 en position toit repliée dans le cas où la lunette arrière est mobile par rapport aux custodes, on peut prévoir des joues de protection 63 (en pointillés figure 2) aux butées 61, les supports 9 sont alors placés plus en arrière du coffre en 9 bis (en pointillés figure 1) afin de laisser la place aux joues 63. Le rideau 4 peut dans ce cas être accroché directement sur l'arrière des joues 63.

Nous allons maintenant décrire le fonctionnement de l'ensemble.

Lorsque le véhicule 1 est en configuration coupé (figures 1 et 3), le toit 2 est déplié et couvre l'habitacle (non représenté).

L'utilisateur souhaitant replier le toit 2 dans le coffre 3 pour transformer sont véhicule 1 en cabriolet doit effectuer les opérations suivantes:
- ouvrir le coffre 3,
- dégager l'ergot 62 du logement 9,
- tirer le rideau 4 à l'aide de la traverse 6,
- engager l'ergot 62 dans le logement 8,
- fermer le coffre 3,
- les capteurs (80) de présence débloquent le système de verrouillage,
- il ne suffit plus qu'à actionner le toit 2 pour qu'il se replie dans le coffre 3.

Cette dernière manoeuvre pouvant être effectuée manuellement, à l'aide d'un moteur ou d'un dispositif hydraulique.

Le véhicule est alors en configuration cabriolet (cf figures 2 et 4).

Pour reprendre sa configuration coupé, il suffit d'effectuer les opérations dans l'ordre inverse.

## Revendications

1. Véhicule automobile (1) transformable comportant un toit (2) rigide basculant entre une position fermée et une position ouverte rangée dans le coffre (3) **caractérisé en ce qu'**il comporte au moins une butée (60, 61) de toit solidaire d'un rideau (4) de protection disposée dans le coffre.

2. Véhicule automobile selon la revendication 1, **caractérisé en ce que** la butée (60, 61) est solidaire d'une traverse (6) formant l'extrémité du rideau (4).

3. Véhicule automobile selon la revendication précédente, **caractérisé en ce que** la butée (60) est implantée sur le dessus de la traverse (6).

4. Véhicule automobile selon une des revendications précédentes, **caractérisé en ce que** le toit (2) est formé de deux custodes (20) et un cadre (21) supportant une lunette arrière (22).

5. Véhicule automobile selon la revendication 4, **caractérisé en ce que** la lunette (22) est mobile par rapport au cadre (21).

6. Véhicule automobile selon une des revendications 2 à 5, **caractérisé en ce que** la traverse (6) est prolongée latéralement par au moins une butée (61) pour supporter les custodes (20).

7. Véhicule automobile selon la revendication 6, **caractérisé en ce que** chaque butée (61) est équipée d'une joue de protection (63).

8. Véhicule automobile selon une des revendications 2 à 7, **caractérisé en ce que** la traverse (6) est guidée dans au moins un logement (8, 9, 9 bis) formant appui et disposé dans la structure du véhicule.

9. Véhicule automobile selon une des revendications 2 à 8, **caractérisé en ce que** le coffre (3) comporte au moins un capteur de présence (80) de la traverse (6).

10. Véhicule automobile selon la revendication 9, **caractérisé en ce que** le capteur (80) coopère avec un système de verrouillage du toit (2).

11. Véhicule automobile une des revendications précédentes, **caractérisé en ce que** selon le rideau (4) s'enroule dans un boîtier (5).

## Claims

1. Convertible motor vehicle (1) comprising a rigid roof (2) tilting between a closed position and an open position stored in the boot (3) **characterised in that** it comprises at least one roof stop (60, 61) integral with a protective curtain (4) arranged in the boot.

2. Motor vehicle according to Claim 1, **characterised in that** the stop (60, 61) is integral with a cross-piece (6) forming the end of the curtain (4).

3. Motor vehicle according to the preceding claim, **characterised in that** the stop (60) is installed on the top of the cross-piece (6).

4. Motor vehicle according to one of the preceding claims, **characterised in that** the roof (2) is formed of two rear quarter panels (20) and a frame (21) supporting a rear window (22).

5. Motor vehicle according to Claim 4, **characterised in that** the rear window (22) is mobile with respect to the frame (21).

6. Motor vehicle according to one of Claims 2 to 5, **characterised in that** the cross-piece (6) is extended laterally by at least one stop (61) in order to support the rear quarter panels (20).

7. Motor vehicle according to Claim 6, **characterised in that** each stop (61) is equipped with a protective flange (63).

8. Motor vehicle according to one of Claims 2 to 7, **characterised in that** the cross-piece (6) is guided within at least one housing (8, 9, 9 bis) forming a support and arranged in the structure of the vehicle.

9. Motor vehicle according to one of Claims 2 to 8, **characterised in that** the boot (3) comprises at least one sensor (80) of the presence of the cross-piece (6).

10. Motor vehicle according to Claim 9, **characterised in that** the sensor (80) co-operates with a system for locking the roof (2).

11. Motor vehicle according to one of the preceding claims, **characterised in that** the curtain (4) rolls up into a housing (5).

## Patentansprüche

1. Umwandelbares Kraftfahrzeug (1) mit einem festen Dach (2), das zwischen einer geschlossenen und einer offenen, im Kofferraum (3) verstauten Position kippbar ist, **dadurch gekennzeichnet, dass** es mindestens einen Anschlag (60, 61) für das Dach aufweist, der mit einem Schutzvorhang (4) im Kofferraum fest verbunden ist.

2. Kraftfahrzeug nach Anspruch 1, **dadurch gekennzeichnet, dass** der Anschlag (60, 61) mit einem Querträger (6) fest verbunden ist, der das Ende des Vorhangs (4) bildet.

3. Kraftfahrzeug nach dem vorhergehenden Anspruch, **dadurch gekennzeichnet, dass** der Anschlag (60) oberhalb des Querträgers (6) angebracht ist.

4. Kraftfahrzeug nach einem der vorhergehenden Ansprüche, **dadurch gekennzeichnet, dass** das Dach (2) von zwei Karosserieteilen (20) und einem Rahmen (21) gebildet wird, der eine Heckscheibe (22) trägt.

5. Kraftfahrzeug nach Anspruch 4, **dadurch gekennzeichnet, dass** die Scheibe (22) gegenüber dem Rahmen (21) beweglich ist.

6. Kraftfahrzeug nach einem der Ansprüche 2 bis 5, **dadurch gekennzeichnet, dass** der Querträger (6) seitlich von mindestens einem Anschlag (61) verlängert wird, um die Karosserieteile (20) zu tragen.

7. Kraftfahrzeug nach Anspruch 6, **dadurch gekennzeichnet, dass** jeder Anschlag (61) mit einer Schutzwange (63) versehen ist.

8. Kraftfahrzeug nach einem der Ansprüche 2 bis 7, **dadurch gekennzeichnet, dass** der Querträger (6) in mindestens einer Aufnahme (8, 9, 9bis) geführt ist, die eine Auflage bildet und im Fahrzeugaufbau angeordnet ist.

9. Kraftfahrzeug nach einem der Ansprüche 2 bis 8, **dadurch gekennzeichnet, dass** der Kofferraum (3) mindestens einen Sensor (80) aufweist, der die Präsenz des Querträgers (6) feststellt.

10. Kraftfahrzeug nach Anspruch 9, **dadurch gekennzeichnet, dass** der Sensor (80) mit einem System zum Verriegeln des Dachs (2) zusammenwirkt.

11. Kraftfahrzeug nach einem der vorhergehenden Ansprüche, **dadurch gekennzeichnet, dass** sich der Vorhang (4) in einem Gehäuse (5) aufrollt.
